# EUROPÄISCHE PATENTSCHRIFT

(11) **EP 3 239 572 B1**
(45) Veröffentlichungstag und Bekanntmachung des Hinweises auf die Patenterteilung: **10.04.2019**
(21) Anmeldenummer: 16167735.6
(22) Anmeldetag: 29.04.2016
(51) Int. Cl.: F16K 31/08, F16K 31/10, F16K 11/052, F16K 31/06

(54) **VORRICHTUNG ZUR DURCHFLUSSREGELUNG EINES FLUIDS**
DEVICE FOR REGULATING THE FLOW OF A FLUID
DISPOSITIF DESTINE A LA REGULATION DU DEBIT D'UN FLUIDE

(43) Veröffentlichungstag der Anmeldung: 01.11.2017
(73) Patentinhaber: Asco Numatics GmbH, 75248 Ölbronn-Dürrn (DE)
(72) Erfinder: Ams,Felix, 75236 Kämpfelbach (DE); Vogt, Martin, 73230 Kirchheim/Teck (DE); Leinen, Max, 76307 Langensteinbach (DE)
(74) Vertreter: Witte, Weller & Partner Patentanwälte mbB

(56) Entgegenhaltungen:
- EP-A1- 2 068 056
- EP-A1- 2 365 239
- WO-A1-2015/149179
- DE-U1-202011 004 616
- GB-A- 2 504 254
- US-A- 3 233 064

## Beschreibung

Die vorliegende Offenbarung betrifft eine Vorrichtung zur Durchflussregelung eines Fluids, mit einem Ventilgehäuse mit zumindest zwei Ventilanschlüssen, wobei im Ventilgehäuse zumindest ein Fluidpfad ausgebildet ist, der sich zwischen den zumindest zwei Ventilanschlüssen erstreckt, zumindest einem Ventilsitz, der dem zumindest einen Fluidpfad zugeordnet ist, zumindest einem Schließkörper, der mit dem zumindest einen Ventilsitz koppelbar ist, um den zumindest einen Fluidpfad zu sperren oder freizugeben, und einer elektromagnetischen Betätigungseinheit zur Betätigung des Schließkörpers, wobei die Betätigungseinheit einen ersten Elektromagnet und einen zweiten Elektromagnet aufweist.

Vorrichtungen dieser oder ähnlicher Art sind aus der WO 2015/149179 A1 und der DE 20 2011 004 616 U1 bekannt.

Die WO 2015/149179 A1 offenbart ein magnetisches Dosierventil, umfassend ein Gehäuse, das mit einer Kammer versehen ist, wobei sich ein erster und ein zweiter Fluidkanal in dem Gehäuse erstrecken, um ein Fluid von dem ersten Fluidkanal zu dem zweiten Fluidkanal über die Kammer strömen zu lassen; einen steuerbaren Elektromagneten mit einem ersten Abschnitt und einem hiervor beabstandeten zweiten Abschnitt, um ein Magnetfeld in der Kammer zu erzeugen; eine Ventilanordnung, die in der Kammer vorgesehen ist und eine erste und eine zweite Kappe aufweist, die einem ersten und einem zweiten Anschluss zugeordnet sind, um den Fluidstrom in der Kammer zu unterbrechen oder zu steuern, wobei die erste und zweite Kappe relativ zu dem ersten und zweiten Anschluss verschwenkbar am Gehäuse befestigt sind, und wobei die erste und zweite Kappe jeweils ein ferromagnetisches Element aufweisen.

Die DE 20 2011 004 616 U1 offenbart einen elektromagnetischen Hubanker-Antrieb, insbesondere für Ventile, mit einem Ankerstab, der in Richtung seiner Längsachse verschiebbar ist, und einem Magnetjoch, das einen ersten Jochschenkel sowie einen zum Ankerstab koaxialen zweiten Jochschenkel aufweist, wobei eine erste Magnetspule den ersten Jochschenkel und eine zweite Magnetspule sowohl den zweiten Jochschenkel als auch den Ankerstab umschließt, und wobei eine der Magnetspulen eine Arbeits- und Messspule ist, die wahlweise zur Verstärkung der Magnetkraft oder zur Positionsbestimmung des beweglichen Ankerstabs eingesetzt werden kann.

Weitere Vorrichtungen ähnlicher Art sind beispielhaft aus der EP 2 365 239 A1 sowie aus der EP 2 068 056 A1 bekannt.

Die EP 2 068 056 A1 zeigt eine Ventilanordnung für flüssige oder gasförmige Medien, die ein Ventilglied in Form eines sogenannten Flappers aufweist. Das Ventilglied ist als elastisch aufgenommene, auslenkbare Klappe gestaltet. Das Ventilglied umfasst einen Schließkörper, der wahlweise einen von zwei Ventilsitzen verschließen und den jeweils anderen freigeben kann. Auf diese Weise lässt sich eine Durchflussregelung bewerkstelligen. Die zugehörige Ventilanordnung umfasst drei Ventilanschlüsse in einem Ventilgehäuse, die zwei Fluidpfade definieren, zwischen denen mittels dem Ventilglied und dem Schließkörper hin- und hergeschaltet werden kann.

Zur Betätigung des Ventils ist ein Elektromagnet vorgesehen, der einen Zuganker umfasst, der auf ein gabelartig gestaltetes Betätigungselement einwirkt, das mit dem Schließkörper gekoppelt ist. Das gabelförmige Betätigungselement ist zwischen dem Zuganker des Elektromagneten und dem Schließkörper des Ventilgliedes angeordnet und stellt eine Kopplung zwischen beiden Komponenten bereit.

Der Elektromagnet ist als einfach wirkender Magnet gestaltet. Der Elektromagnet wirkt gegen die Kraft einer Schließfeder. Somit kann die Ventilanordnung in einem bestromten Zustand des Elektromagneten in einem ersten Zustand und in einem nicht bestromten Zustand des Elektromagneten in einem zweiten Zustand betrieben werden, denen entsprechende Stellungen des Ventilglieds zugeordnet sind.

Aus der EP 2 365 239 A1 ist eine Vorrichtung zur Durchflussregelung eines flüssigen oder gasförmigen Mediums bekannt, die eine Ventilanordnung umfasst, die ein Ventilgehäuse mit drei Ventilanschlüssen aufweist, wobei zwischen den drei Ventilanschlüssen zwei Fluidpfade definiert sind, die mittels einem auslenkbaren Ventilglied, das einen Schließkörper aufweist, selektiv aktivierbar oder blockierbar sind. Das Ventilglied umfasst einen Schließkörper, der etwa glockenartig gestaltet ist und verschwenkbar bzw. auslenkbar ist, um in einer ersten Stellung einen ersten Ventilanschluss und einer zweiten Stellung einen zweiten Ventilanschluss zu sperren. Das Ventilglied umfasst neben dem Schließkörper ferner einen Träger, an dem ein Betätigungsabschnitt ausgebildet ist. Der Betätigungsabschnitt kann etwa quer zu seiner Längserstreckung belastet und ausgelenkt werden, um den Schließkörper, ähnlich einer Glocke, zu verschwenken.

Zur Betätigung der Ventilanordnung gemäß der EP 2 356 239 A1 ist ein Elektromagnet vorgesehen, der einen Klappanker oder Schwenkanker aufweist. Am Klappanker sind Betätigungselemente in Form von Flachfedern oder Blattfedern ausgebildet, die auf einen Betätigungsabschnitt des Trägers des Ventilgliedes einwirken können. Der Klappanker kann zwischen zwei Stellungen hin- und herverschwenkt werden. Jede der Schaltstellungen des Klappankers entspricht einer entsprechenden Stellung des Schließkörpers.

In einem bestromten Zustand des Elektromagneten befindet sich die Ventilanordnung in einem ersten Zustand, bei dem etwa ein erster Fluidpfad aktiviert ist. In einem stromlosen Zustand des Magnetankers befindet sich die Ventilanordnung in einem zweiten Zustand, in dem etwa ein zweiter Fluidpfad aktiviert ist. Der jeweils andere Fluidpfad ist vorzugsweise gesperrt. Zur Rückstellung des Klappankers bzw. des Schließkörpers sind dem Klappanker Permanentmagneten zugeordnet, die ähnlich einer Feder eine Rückstellkraft bewirken.

Die in der EP 2 365 239 A1 sowie der EP 2 068 056 A1 gezeigten Vorrichtungen umfassen jeweils einen einzigen Elektromagneten, mit dem das jeweilige Ventilglied bzw. dessen Schließkörper betätigt werden kann. Insbesondere in Kombination mit einem Rückstellelement in Form einer Feder oder eines Permanentmagneten kann auch bei einem einfach wirkenden Elektromagneten die Ventilanordnung sicher in zumindest zwei Schaltstellungen betrieben werden.

Ferner zeigen die EP 2 068 056 A1 sowie die EP 2 365 239 A1 Ventilanordnungen, die eine hermetische Trennung zwischen einer Ventilkammer, in die die Ventilanschlüsse münden und der Betätigungseinheit ermöglichen. Derartigen Ventilanordnungen können auch als mediengetrennte Ventilanordnungen bezeichnet werden. Die hermetische Trennung zwischen der Ventilkammer und der Betätigungseinheit vereinfacht die Nutzung der Ventilanordnungen im medizinischen und/oder analytischen Umfeld.

Generell besteht ein Bedürfnis an kompakt gestalteten Ventilanordnungen, die möglichst wenig Bauraum beanspruchen. Gleichwohl soll dies nach Möglichkeit keine Abstriche bei der Leistungsfähigkeit den Ventilanordnungen mit sich bringen. Dies betrifft insbesondere die möglichen Druckbereiche und/oder Durchflussbereiche, die mit den Ventilanordnungen sicher geschaltet werden können und/oder steuerbar sind.

Vor diesem Hintergrund liegt der Offenbarung die Aufgabe zugrunde, eine Vorrichtung zur Durchflussregelung eines Fluids für eine Ventilanordnung anzugeben, die eine erhöhte Leistungsdichte erlaubt und auch bei begrenztem Bauraum gleichwohl eine hohe Leistungsfähigkeit aufweist. Ferner sollen sich nach Möglichkeit weitere Optionen für die Ansteuerung der Vorrichtung ergeben. Dies soll beispielhaft einen Modus mit geringer Energieaufnahme sowie einen Modus mit hoher Leistungsfähigkeit umfassen. Darüber hinaus soll die Funktionssicherheit erhöht werden. Nach Möglichkeit soll eine Ventilanordnung, die mit einer derartigen Vorrichtung zur Durchflussregelung versehen ist, entweder bei einem gegebenen Bauraum einen erweiterten Einsatzbereich abdecken, insbesondere im Hinblick auf zu regelnde Drücke und/oder Durchflussmengen. Alternativ soll bei gegebenen Anforderungen an Durchflussmengen und/oder zu regelnde Drücke der Bauraum möglichst reduziert werden.

Diese Aufgabe wird bei einer Vorrichtung gemäß der vorgenannten Art erfindungsgemäß dadurch gelöst, dass der erste Elektromagnet und der zweite Elektromagnet über einen Koppelmechanismus mit dem zumindest einen Schließkörper gekoppelt sind, dass der erste Magnet und der zweite Magnet additiv auf den zumindest einen Schließkörper einwirken, um den zumindest einen Schließkörper zwischen zumindest zwei Stellungen zu verlagern, und dass der Koppelmechanismus eine Zwangskopplung zwischen dem ersten Elektromagneten und dem zweiten Elektromagneten bewirkt.

Die Aufgabe der Erfindung wird auf diese Weise vollständig gelöst.

Erfindungsgemäß kann nämlich dadurch, dass beide Elektromagneten additiv auf den Schließkörper einwirken, eine deutlich höhere Magnetkraft bereitgestellt werden, um den Schließkörper zu betätigen. Dies erlaubt einerseits das Schalten wesentlich höherer Drücke. Ferner können etwa Querschnitte der Fluidpfade im Ventilgehäuse größer gestaltet werden. Darüber hinaus kann aufgrund der erhöhten Magnetkraft ein besseres Dynamikverhalten und ein schnelleres Ansprechen der Vorrichtung bewirkt werden.

Der erste Elektromagnet und der zweite Elektromagnet können insbesondere gemeinsam und gleichwirkend auf den Schließkörper einwirken. Dies heißt nicht unbedingt, dass beide Elektromagneten in Reihe angeordnet sind. Vielmehr ist es auch vorstellbar, dass die Elektromagneten unterschiedliche Krafteinleitungspunkte/ Kraftangriffspunkte in Bezug auf den Schließkörper aufweisen. Somit können die beiden Elektromagneten etwa nebeneinander oder beliebig einander gegenüberliegend angeordnet sein, um einen gegebenen Bauraum möglichst effektiv zu nutzen.

Der Koppelmechanismus erlaubt in einfacher Weise eine Verbindung sowohl des ersten Elektromagneten als auch des zweiten Elektromagneten mit dem Schließkörper.

Der Schließkörper ist üblicherweise Bestandteil eines Ventilglieds. Der Schließkörper kann etwa als Klappe, Membran oder als Hebel ausgeführt sein.

Die Gestaltung der Vorrichtung mit einer Betätigungseinheit, die zwei Elektromagneten aufweist, die additiv auf den Schließkörper einwirken, eignet sich insbesondere für Ventilanordnungen, die zwei Fluidpfade aufweisen, die etwa durch drei Ventilanschlüsse definiert sind. Beispielhaft können die drei Ventilanschlüsse zwei Eingänge sowie einen Ausgang umfassen, oder umgekehrt. Jeweils zwischen einem der beiden Eingänge und dem Ausgang (oder umgekehrt zwischen einem der beiden Ausgänge und dem Eingang) erstreckt sich ein Fluidpfad.

Jedem Fluidpfad ist beispielhaft ein Ventilsitz zugeordnet, an den der Schließkörper zu Anlage gelangen kann. Demgemäß kann der Schließkörper in einer ersten der beiden Stellungen einen ersten Ventilsitz und in einer zweiten der beiden Stellungen einen zweiten Ventilsitz abdichten. Demgemäß kann selektiv der erste Fluidpfad oder der zweite Fluidpfad blockiert oder freigegeben werden.

Bei gegebener Spannung erlaubt die Berücksichtigung eines zweiten Elektromagneten idealerweise eine Verdopplung der erzielbaren Magnetkräfte. Es kann sich insgesamt, bei gegebenen Leistungsdaten, eine kompaktere Bauform der Ventilanordnung ergeben. Umgekehrt können sich, bei gegebener Baugröße, verbesserte Leistungsdaten ergeben.

Die Vorrichtung eignet sich insbesondere zur Ansteuerung und/oder Regelung von Mikroventilen, die in der medizinischen Diagnostik und Therapie sowie in der medizinischen und industriellen Analysentechnik zum Einsatz kommen. Vorzugsweise ist die Ventilanordnung als mediengetrennte Ventilanordnung ausgeführt, wobei das Ventilglied mit dem Schließkörper eine hermetische Abdichtung zwischen den Elektromagneten einerseits sowie den Fluidpfaden andererseits bewirkt.

Der Koppelmechanismus kann in zumindest einigen Ausgestaltungen das Ventilglied, dem der Schließkörper zugeordnet ist, in sich integrieren. Mit anderen Worten kann das Ventilglied ein Element des Koppelmechanismus bilden. Es sind jedoch auch Ausgestaltungen vorstellbar, bei denen der Koppelmechanismus an ein (separates) Ventilglied ankoppelt.

Der erste Elektromagnet und der zweite Elektromagnet wirken additiv auf den Schließkörper ein. Mit anderen Worten wirken der erste Elektromagnet und der zweite Elektromagnet regelmäßig gemeinsam auf den Schließkörper ein, um diesen bei einer Bestromung der Elektromagnete in eine bestimmte Stellung zu verlagern. Demgemäß ist üblicherweise auch bei zwei Elektromagneten eine Rückstelleinheit vorgesehen, die etwa eine Rückstellfeder/Schließfeder oder einen Permanentmagneten zur Rückstellung umfasst. Würde der erste Elektromagnet in Richtung auf eine erste Stellung des Schließkörpers und der zweite Elektromagnet in Richtung auf eine zweite Stellung des Schließkörpers auf diesen einwirken, so könnte sich keine Magnetkrafterhöhung oder Magnetkraftverdopplung ergeben.

In bevorzugter Weiterbildung der Vorrichtung weisen der erste Elektromagnet und der zweite Elektromagnet gegensinnige Wirkrichtungen auf. Dies betrifft insbesondere eine Bewegung des Ankers bzw. eine Polung der Elektromagneten. Der Koppelmechanismus, der zwischen dem ersten Elektromagneten und dem zweiten Elektromagneten sowie dem Schließkörper angeordnet ist, erlaubt gewissermaßen eine Umlenkung der gegensinnigen Wirkrichtungen derart, dass der erste Elektromagnet und der zweite Elektromagnet gemeinsam additiv auf den Schließkörper einwirken. Mit anderen Worten ist es beispielsweise nicht erforderlich, beide Elektromagneten - bezogen auf ihre Wirkrichtungen - unmittelbar hintereinander anzuordnen und mechanisch seriell miteinander zu verschalten, um deren Magnetkräfte zu addieren.

Die Richtungsangaben beziehen sich beispielsweise auf sich bei der Bestromung ergebende Flussrichtungen und resultierende Magnetkräfte. Es versteht sich, dass die gegensinnigen Zugrichtungen oder die gegensinnigen Schwenkrichtungen bei einer gleichartigen Bestromung der Elektromagneten auftreten. Jedoch sind etwa die Spulen der Elektromagneten derart angeordnet und elektrisch angesteuert, dass sich gegensinnige (mechanische) Wirkrichtungen ergeben können.

Gemäß einer weiteren Ausgestaltung der Vorrichtung umfasst der erste Elektromagnet einen ersten Anker und der zweite Elektromagnet einen zweiten Anker, die dem Koppelmechanismus zugeordnet sind. Der erste Anker und der zweite Anker können direkt mit dem Koppelmechanismus gekoppelt sein. Beispielhaft umfasst der Koppelmechanismus einen wippenartigen Hebel, wobei der erste Anker einem ersten Ende und der zweite Anker einem zweiten Ende zugeordnet ist.

Gemäß einer Weiterbildung der Vorrichtung sind der erste Anker und/oder der zweite Anker als Zuganker gestaltet, wobei der erste Anker und der zweite Anker vorzugsweise gegensinnige Zugrichtungen aufweisen. Auf diese Weise können sich die Magnetkräfte der Elektromagneten verdoppeln, wenn die Anker einander entgegengesetzten Enden eines Hebels zugeordnet sind.

Gemäß einer weiteren Ausgestaltung sind der erste Anker und/oder der zweite Anker als Schwenkanker oder Klappanker gestaltet, wobei der erste Anker und der zweite Anker vorzugsweise gegensinnige Schwenkrichtungen aufweisen.

Auch auf diese Weise kann etwa über einen Koppelmechanismus eine Addition der Magnetkräfte erfolgen.

Gemäß einer weiteren Ausgestaltung der Vorrichtung sind zumindest der erste Elektromagnet oder der zweite Elektromagnet mit einer Rückstelleinheit gekoppelt, die magnetische Rückstellelemente oder mechanische Rückstellelement umfasst.

Bei den mechanischen Rückstellelementen handelt es sich insbesondere um Federn. Federn können als mechanische Federn oder als fluidische Federn gestaltet sein. Bei den magnetischen Rückstellelementen handelt es sich insbesondere um Permanentmagneten. Auf diese Weise kann einer der zwei Zustände des Schließkörpers ohne äußere Krafteinleitung herbeigeführt werden, wenn die Elektromagneten nicht bestromt werden.

Gemäß einer weiteren Ausgestaltung der Vorrichtung ist zumindest der erste Anker oder der zweite Anker über ein Ausgleichselement, insbesondere eine Pufferfeder, mit dem Koppelmechanismus gekoppelt.

Auf diese Weise gibt es keine starre Kopplung zwischen den Ankern und weiteren Komponenten des Koppelmechanismus. Dies kann insbesondere zur Vermeidung von Stößen oder ruckartigen Belastungen beitragen und das Betriebsverhalten der Elektromagneten glätten. Es kann sich eine verbesserte Steuercharakteristik ergeben. Ferner sinken die Genauigkeitsanforderungen an die Bauteile wodurch die Fertigung vereinfacht wird.

Der Koppelmechanismus bewirkt eine Zwangskopplung zwischen dem ersten Elektromagneten und dem zweiten Elektromagneten. Auf diese Weise wird sichergestellt, dass der erste Elektromagnet und der zweite Elektromagnet additiv auf den Schließkörper einwirken. Die Zwangskopplung kann auch als mechanische Zwangskopplung bezeichnet werden.

Gemäß einer weiteren Ausgestaltung der Vorrichtung umfasst der Koppelmechanismus einen Schwenkhebel, auf den der erste Elektromagnet und der zweite Elektromagnet einwirken. Beispielhaft ist der Schwenkhebel als Wippe oder Kipphebel ausgestaltet. Gemäß zumindest einer beispielhaften Ausführungsform ist der erste Elektromagnet einem ersten Ende des Schwenkhebels und der zweite Elektromagnet einem zweiten Ende des Schwenkhebels zugeordnet.

Es sind jedoch auch alternative Ausgestaltungen von Schwenkhebeln vorstellbar, bei denen der erste Elektromagnet und der zweite Elektromagnet trotz ihrer gegensinnigen Wirkrichtung gemeinsam additiv auf den Schwenkhebel einwirken.

Gemäß einer weiteren Ausgestaltung der Vorrichtung ist die Betätigungseinheit vom zumindest einen Fluidpfad hermetisch getrennt. Dies betrifft insbesondere zumindest den ersten Elektromagneten und den zweiten Elektromagneten. Vorzugsweise sind auch wesentliche oder alle Komponenten des Koppelmechanismus vom zumindest einen Fluidpfad bzw. der Ventilkammer hermetisch getrennt. Auf diese Weise eignet sich die Ventilanordnung für diagnostische und medizinische Zwecke. Die Reinigung und Wartung der Ventilanordnung und der Betätigungseinheit kann sich deutlich vereinfachen.

Gemäß einer weiteren Ausgestaltung der Vorrichtung bewirkt der Schließkörper eine Abdichtung zwischen dem zumindest einen Fluidpfad und der Betätigungseinheit, wobei der Schließkörper zumindest abschnittsweise auslenkbar ist, um den zumindest einen Ventilsitz zu verschließen oder zu öffnen.

Gemäß einer beispielhaften Ausgestaltung dient der Schließkörper somit nicht nur zur Abdichtung des jeweiligen Ventilsitzes in einer der zumindest zwei Stellungen. Darüber hinaus bewirkt der Schließkörper selbst auch die hermetische Trennung der Betätigungseinheit vom zumindest einen Fluidpfad bzw. der Ventilkammer. Dies hat den Vorteil, dass keine weiteren Bauteile erforderlich sind. Ein und derselbe Schließkörper kann eine Mehrzahl von Funktionen erfüllen.

Gemäß einer weiteren Ausgestaltung der Vorrichtung umfasst der Schließkörper eine Membran. Die Membran kann eine Mehrzahl von Dichtungsabschnitten umfassen, die jeweils einem Ventilsitz zugeordnet sind. Die Membran als solches ist zumindest abschnittsweise auslenkbar, um die Dichtungsabschnitte selektiv dichtend zur Anlage an die Ventilsitze zu bringen. Darüber hinaus kann die Membran selbst auch zur hermetischen Trennung des Fluidpfades von der Betätigungseinheit beitragen.

Gemäß einer weiteren Ausgestaltung ist der Schließkörper einem Ventilglied zugeordnet, das ein Trägerteil umfasst, insbesondere ein auslenkbares Trägerteil. Das Trägerteil kann etwa aus einem metallischen Werkstoff gestaltet sein. Vorzugsweise ist der Schließkörper im Wesentlichen aus einem weichelastischen oder gummielastischen Werkstoff gebildet. Das Ventilglied mit dem Trägerteil und dem Schließkörper kann etwa durch Umspritzen des Trägerteils, durch Vulkanisieren oder in ähnlicher Weise gefertigt sein. Über das Trägerteil kann der Koppelmechanismus auf den Schließkörper einwirken. Das Trägerteil selbst kann in zumindest einigen beispielhaften Ausgestaltungen einen Bestandteil des Koppelmechanismus bilden. Insbesondere kann das Trägerteil selbst hebelartig oder wippenartig gestaltet sein.

Gemäß einer weiteren beispielhaften Ausgestaltung der Vorrichtung sind der erste Elektromagnet und der zweite Elektromagnet gemeinsam in einem bestromten Zustand und einem nicht bestromten Zustand betreibbar, um den Schließkörper in eine erste Schließstellung und eine zweite Schließstellung zu verlagern, wobei die erste Schließstellung dem bestromten Zustand und die zweite Schließstellung dem nicht bestromten Zustand zugeordnet ist. Jede der beiden Schließstellungen kann einen zugeordneten Fluidpfad sperren und einen anderen Fluidpfad freigeben.

Gemäß einer weiteren Ausgestaltung der Vorrichtung sind der erste Elektromagnet und der zweiten Elektromagnet gemeinsam parallel sowie seriell bestrombar, um zumindest eine erste Betriebsart und eine zweite Betriebsart bereitzustellen. Bei einer seriellen Bestromung (in Reihe) ergibt sich bei gegebener Spannung die halbe Spulenleistung und somit die halbe Magnetkraft, verglichen mit der Bestromung eines einzigen Elektromagneten. Bei einer parallelen Bestromung ergibt sich hingegen eine doppelte Spulenleistung verbunden mit einer doppelten Magnetkraft.

Eine mögliche Anwendung der parallelen und seriellen Bestrombarkeit kann darin bestehen, die Vorrichtung in einem Anzugmodus (parallele Ansteuerung) und in einem Haltemodus (serielle Ansteuerung) zu betreiben. Dies kann die erforderliche Leistung im Haltemodus, wenn üblicherweise nur noch geringe Kräfte aufgebracht werden müssen, deutlich reduzieren.

Ein typischer Schaltvorgang (elektrische Aktivierung des Ventils) umfasst beispielhaft einen kurzen Zeitraum, in dem die Spulen der Elektromagneten parallel bestromt werden. Demgemäß besteht bei gegebener Spannung ein Leistungsbedarf von 100 %. Ein solcher Zeitraum, der etwa auch als Anzugszeit bezeichnet werden kann, beträgt beispielhaft etwa 100 ms (Millisekunden). Nach der Anzugszeit kann die Vorrichtung aus dem Anzugsmodus in einen Haltemodus überführt werden, der beispielhaft eine serielle Ansteuerung der Spulen der Elektromagnete umfasst. Demgemäß wird bei gegebener Spannung nur noch ein Viertel (25 %) der Leistung benötigt. Somit kann sich zum einen der Energieverbrauch deutlich reduzieren. Ferner wird wesentlich weniger Energie in Wärme umgesetzt.

Vergleichen mit der parallelen Bestromung erlaubt die serielle Bestromung eine Leistungsreduktion auf ein Viertel. Andere Betriebsarten sind vorstellbar, bei denen die parallele und die serielle Bestromung nutzbar ist.

Gemäß einer beispielhaften Weiterbildung sind die Elektromagneten, insbesondere deren Spulen, in einem gemeinsamen Gehäuse aufgenommen. Es kann sich beispielhaft eine Doppelspulenanordnung für die Spulen der beiden Elektromagnete ergeben. In zumindest einer beispielhaften Ausgestaltung nutzen die Elektromagneten ein gemeinsames Magnetjoch.

Die Aufgabe der Erfindung wird ferner durch eine Ventilanordnung gelöst, die eine Vorrichtung zur Durchflussregelung gemäß zumindest einer der hierin beschriebenen Ausführungsformen umfasst. Beispielhaft ist eine solche Ventilanordnung als Flapper-Ventilanordnung, Membran-Ventilanordnung oder als Trennhebel-Ventilanordnung ausgeführt.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der vorliegenden Erfindung zu verlassen.

Weitere Merkmale und Vorteile der Erfindung ergeben sich aus der nachfolgenden Beschreibung mehrerer bevorzugter Ausführungsbeispiele unter Bezugnahme auf die Zeichnungen. Es zeigen:
- Fig. 1: einen Längsschnitt durch eine Ventilanordnung, die mit einer Vorrichtung zur Durchflussregelung versehen ist;
- Fig. 2: eine perspektivische explodierte Teildarstellung der Anordnung gemäß Fig. 1;
- Fig. 3: eine Schnittdarstellung einer weiteren Ausführungsform einer Ventilanordnung, die mit einer Vorrichtung zur Durchflussregelung versehen ist;
- Fig. 4: eine Schnittansicht einer weiteren Ausführungsform einer Ventilanordnung, die mit einer Vorrichtung zur Durchflussregelung versehen ist;
- Fig. 5: eine weitere, teilweise geschnittene Ansicht der Anordnung gemäß Fig. 4, wobei die Schnittebene von der in Fig. 4 gewählten Schnittebene versetzt ist;
- Fig. 6: eine schematische, stark vereinfachte seitliche Teilansicht einer Betätigungseinheit für die in den Figuren 4 und 5 gezeigte Anordnung, zur weiteren Veranschaulichung; und
- Fig. 7: eine schematische, starke vereinfachte Darstellung einer weiteren Ausführungsform einer Betätigungseinheit für eine Vorrichtung zur Durchflussregelung.

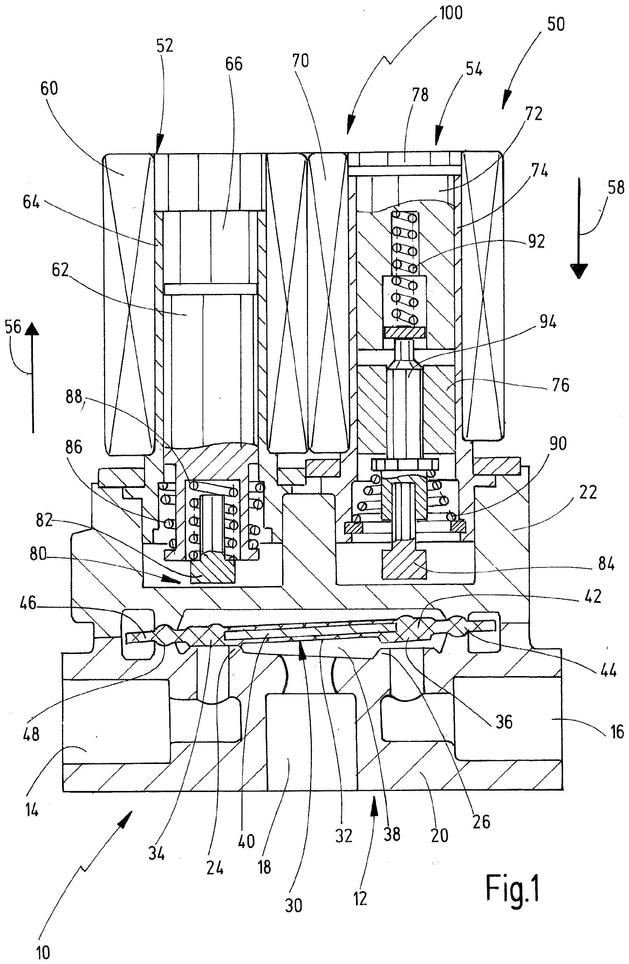

Mit Verweis auf die nachfolgend näher beschriebenen Figuren 1 bis 7 werden verschiedene Ausgestaltungen von Vorrichtungen zur Durchflussregelung für Ventilanordnungen beschrieben, die jeweils eine Betätigungseinheit umfassen, die zwei Elektromagneten aufweist.

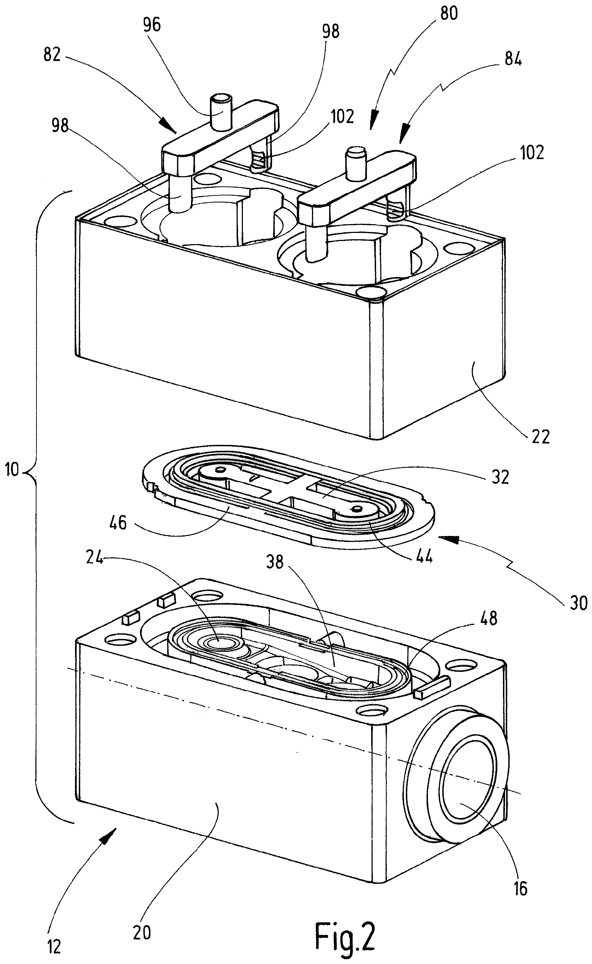

Im Hinblick auf die anhand der Figuren 1 und 2 veranschaulichte Ventilanordnung wird insbesondere auf die EP 2 068 056 A1 verwiesen, die eine ähnliche Ventilanordnung beschreibt, die jedoch mit einer Vorrichtung zur Durchflussregelung versehen ist, die lediglich eine Betätigungseinheit mit einem einzigen Elektromagneten aufweist.

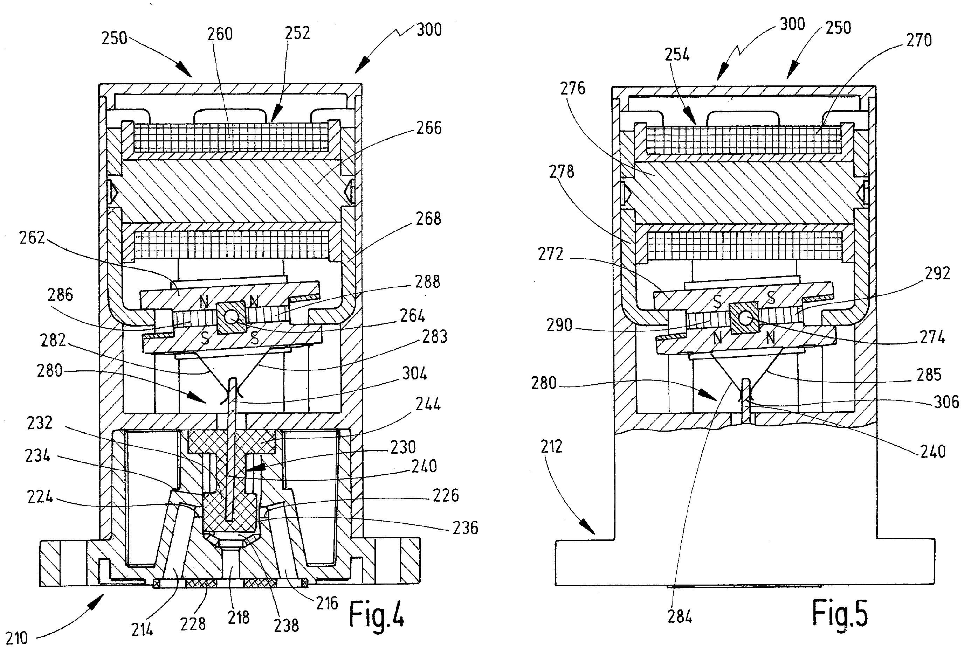

Im Hinblick auf die anhand der Figuren 4, 5 und 6 veranschaulichte Ausführungsform einer weiteren Ventilanordnung wird ergänzend auf die EP 2 365 239 A1 verwiesen, die eine grundsätzlich ähnlich gestaltete Ventilanordnung beschreibt, die mit einer Vorrichtung zur Durchflussregelung versehen ist, die eine Betätigungseinheit mit lediglich einem Elektromagneten aufweist.

Anhand der Figuren 1 und 2 wird eine insgesamt mit 10 bezeichnete Ventilanordnung veranschaulicht, die ein sogenanntes Flapper-Ventil umfasst. Die Ventilanordnung 10 ist mit einer Vorrichtung 100 zur Durchflussregelung versehen.

Die Ventilanordnung 10 umfasst ein Ventilgehäuse 12, das mit einem ersten Anschluss 14, einem zweiten Anschluss 16 sowie einem dritten Anschluss 18 versehen ist. Das Gehäuse 12 ist beispielhaft durch ein erstes Gehäuseteil 20 und ein zweites Gehäuseteil 22 gebildet. Die Anschlüsse 14, 16, 18 sind am Gehäuseteil 20 ausgebildet. Dem ersten Anschluss 14 ist ein erster Ventilsitz 24 zugeordnet. Dem zweiten Anschluss 16 ist ein zweiter Ventilsitz 26 zugeordnet.

Die Ventilanordnung 10 umfasst ferner ein Ventilglied 30, das einen Schließkörper 32 umfasst. Das Ventilglied 30 ist beispielhaft zwischen den Gehäuseteilen 20 und 22 aufgenommen. Der Schließkörper 32 umfasst einen ersten Abschnitt 34 und einen zweiten Abschnitt 36. Die Abschnitte 34, 36 können auch als Dichtungsabschnitte oder Schließabschnitte bezeichnet werden. Der erste Abschnitt 34 ist dem ersten Ventilsitz 24 zugeordnet. Der zweite Abschnitt 36 ist dem zweiten Ventilsitz 26 zugeordnet. Das Ventilglied 30 ist derart gestaltet, dass einer der beiden Abschnitte 34, 36 an dem ihm zugeordneten Ventilsitz 24, 26 dichtend zur Anlage kommen kann, wenn der andere Abschnitt 34, 36 von seinem Ventilsitz 24, 26 abgehoben ist. Somit kann wechselseitig einer von zwei Ventilpfaden, die zwischen den Anschlüssen 14, 16, 18 ausgebildet sind, blockiert oder freigegeben werden. Ein erster Fluidpfad ist zwischen den Anschlüssen 14 und 18 definiert. Ein zweiter Fluidpfad ist zwischen den Anschlüssen 16 und 18 definiert.

Zumindest der Anschluss 18 mündet in eine Ventilkammer 38, die durch den Schließkörper 32 begrenzt wird. Je nach Stellung des Schließkörpers 32 ist der Anschluss 14 oder der Anschluss 16 mit der Ventilkammer 38 fluidisch verbunden. Dies ist mit nur einem Schließkörper 32 möglich.

Das Ventilglied 30 umfasst ferner einen Träger 40, der beispielhaft den Schließkörper 32 abstützt. Der Träger 40 besteht üblicherweise aus einem Werkstoff, der deutlich steifer als der Werkstoff ist, aus dem der Schließkörper 32 besteht, also etwa aus Stahl oder einem anderen Metallwerkstoff. Beispielhaft kann der Schließkörper 32 eine Weichkomponente 42 umfassen. Dabei kann es sich etwa um einen gummielastischen Werkstoff handeln. Die nähere Gestaltung des Ventilgliedes 30 mit dem Schließkörper 32 kann insbesondere der explodierten perspektivischen Darstellung in Fig. 2 entnommen werden.

Das Ventilglied 30 umfasst ferner eine Aufnahmedichtung 44 sowie einen Rand 46, der beispielhaft als umlaufender Rand gestaltet ist. Die Aufnahmedichtung 44 sitzt im montierten Zustand des Ventilgliedes 30 in einer Nut 48, die gemeinsam durch die Gehäuseteile 20, 22 des Gehäuses 12 gebildet ist. Auf diese Weise kann die Ventilkammer 38 hermetisch durch das Ventilglied 30, insbesondere durch den Schließkörper 32, abgedichtet werden. Somit wird beispielhaft das Gehäuseteil 22 nicht durch das Fluid kontaktiert, das die Ventilanordnung 10 durchströmt. Bei dem Fluid kann es sich etwa um ein gasförmiges oder ein flüssiges Medium handeln.

Die Vorrichtung 100 dient zur Durchflussregelung für die Ventilanordnung 10. Die Vorrichtung 100 umfasst eine Betätigungseinheit 50. Die Betätigungseinheit 50 weist einen ersten Elektromagneten 52 und einen zweiten Elektromagneten 54 auf. Die Elektromagneten 52, 54 sind beispielhaft in einem gemeinsamen Gehäuse aufgenommen (nicht explizit in Fig. 1 gezeigt). Die Elektromagneten 52, 54 sind räumlich in unmittelbarer Nähe zueinander angeordnet.

Der erste Elektromagnet 52 weist eine Wirkrichtung 56 auf. Der zweite Elektromagnet 54 weist eine Wirkrichtung 58 auf. Die Wirkrichtungen 56, 58 der Elektromagneten 52, 54 sind einander entgegengerichtet.

Der erste Elektromagnet 52 umfasst eine Spule 60 sowie einen Anker 62, der in einer Führungshülse 64 geführt ist. Ferner ist ein Stopfen 66 vorgesehen. Der Anker 62 ist beweglich in der Führungshülse 64 aufgenommen. Der Stopfen 66 ist fest mit der Führungshülse 64 verbunden.

Der zweite Elektromagnet 54 umfasst eine Spule 70 sowie einen Anker 72, der in einer Führungshülse 74 beweglich aufgenommen ist. Ferner umfasst der zweite Elektromagnet 54 einen Stopfen 76 sowie eine Kappe 78, die einen Abschluss ausbildet. Der Anker 72 ist zwischen dem Stopfen 76 und der Kappe 78 beweglich in der Führungshülse 74 aufgenommen. Die Stopfen 66, 76 des ersten Elektromagneten 52 und des zweiten Elektromagneten 54 können auch als Magnetkern bezeichnet werden.

Die Elektromagneten 52, 54 sind jeweils als Zugmagneten ausgebildet, wobei die Anker 62, 72 als Zuganker ausgebildet sind. Eine Zugrichtung des Ankers 62 des ersten Elektromagneten 52 entspricht der Wirkrichtung 56. Eine Zugrichtung des Zugankers 72 des zweiten Elektromagneten 54 entspricht der Wirkrichtung 58. Wenn die Elektromagneten 52, 54, insbesondere deren Spulen 60, 70, bestromt werden, werden die Anker 62, 72 angezogen, wobei sich gemäß den Wirkrichtungen 56, 58 gegensinnige Bewegungsrichtungen ergeben. Mit anderen Worten bewegt sich der Anker 62 weg vom Ventilglied 30 der Ventilanordnung 10. Hingegen bewegt sich der Anker 72 in Richtung auf das Ventilglied 30 der Ventilanordnung 10.

Die Vorrichtung 100 umfasst ferner einen Koppelmechanismus 80, der die Elektromagneten 52, 54 miteinander koppelt. Ferner koppelt der Koppelmechanismus 80 die Betätigungseinheit 50 mit dem Ventilglied 30, insbesondere mit dessen Schließkörper 32.

Der Koppelmechanismus 80 umfasst Betätigungselemente 82, 84, die beispielhaft als Betätigungsgabeln ausgestaltet sind. Das Betätigungselement 82 ist dem ersten Elektromagneten 52 zugeordnet. Das Betätigungselement 84 ist dem zweiten Elektromagneten 54 zugeordnet. Eine beispielhafte Gestaltung der Betätigungselemente 82, 84 kann der explodierten Darstellung gemäß Fig. 2 entnommen werden.

Die Betätigungselemente 82, 84 koppeln die Elektromagneten 52, 54, insbesondere deren Anker 62, 72, mit dem Schließkörper 32.

Wenn die in Fig. 1 gezeigten Elektromagneten 52, 54 bestromt werden, werden die Anker 62, 72 angezogen. Dies bewirkt eine Bewegung bzw. Auslenkung des Schließkörpers 32, wodurch der Abschnitt 34 des Schließkörpers 32 vom Ventilsitz 24 abgehoben wird. Ferner gelangt der Abschnitt 36 dichtend zur Anlage am Ventilsitz 26. Demgemäß entspricht der in Fig. 1 gezeigte Zustand dem nicht bestromten Zustand der Elektromagneten 52, 54.

Der Anker 62 des Elektromagneten 52 wirkt im bestromten Zustand einer Vorspannkraft einer Schließfeder 86 entgegen. Der Anker 72 des Elektromagneten 54 wirkt im bestromten Zustand einer Vorspannkraft einer Schließfeder 90 entgegen. Die Schließfeder 86 drängt den Anker 62 in Richtung auf den Schließkörper 32. Die Schließfeder 90 drängt den Anker 72 weg vom Schließkörper 32. Auf diese Weise wird im nicht bestromten Zustand der Elektromagneten 52, 54 eine definierte Ruhestellung des Schließkörpers 32 bewirkt, vergleiche die in Fig. 1 gezeigte Stellung. Die Elektromagneten 52, 54 ergänzen sich und wirken additiv auf den Schließkörper 32 ein.

Gemeinsam bilden die Schließfedern 86, 90 Rückstellelemente einer Rückstelleinheit.

Gemäß der anhand der Figuren 1 und 2 veranschaulichten beispielhaften Ausführungsform erfolgt die Kopplung zwischen dem Betätigungselement 82 und dem Anker 62 über eine Pufferfeder 88. Ferner erfolgt die Kopplung zwischen dem Betätigungselement 84 und dem Anker 72 über eine Pufferfeder 92 sowie einen Stößel 94. Die Pufferfedern 88, 92 können auch als Ausgleichselemente bezeichnet werden. Die Ausgleichselemente können die Kraftverhältnisse bei den Elektromagneten 52, 54 sowie zwischen den Elektromagneten 52, 54 und dem Koppelmechanismus 80 optimieren. Beispielhaft können die Pufferfedern 88, 92 zur Definition bzw. zur Minimierung des sich ergebenden Luftspaltes zwischen dem Anker 62 sowie dem Stopfen 66 und zwischen dem Anker 72 sowie dem Stopfen 76 genutzt werden.

Der Stößel 94, der die Pufferfeder 92 mit dem Betätigungselement 84 verbindet, durchragt den Stopfen 76 und ist vorzugsweise aus nichtmagnetischem Material. Der Stopfen 76 ist fest an der Führungshülse 74 aufgenommen.

Die als Betätigungsgabeln ausgestalteten Betätigungselemente 82, 84 umfassen jeweils einen Gabelschaft 96 sowie Gabelarme 98, vergleiche auch Fig. 2. An den Gabelarmen 98 ist jeweils eine Mitnahmeausnehmung 102 zur formschlüssigen Mitnahme des Ventilgliedes 30 ausgebildet, um den Schließkörper 32 zu verlagern. Die Mitnahmeausnehmungen 102 können beispielsweise am Rand 46 des Ventilgliedes 30 angreifen. Die Mitnahme kann sowohl einen Zug (vergleiche den Pfeil 56 in Fig. 1) als auch einen Druck (vergleiche den Pfeil 58 in Fig. 1) umfassen.

Das Ventilglied 30 ist grundsätzlich dem in der EP 2 068 056 A1 gezeigten Ventilglied ähnlich gestaltet. Demgemäß erstreckt sich der Träger 30 nicht nur innerhalb des Bereichs, der durch die Aufnahmedichtung 44 begrenzt ist. Stattdessen kann sich der Träger 40 zumindest abschnittsweise auch im Bereich des Randes 46 erstrecken. Demgemäß kann über den Träger 40 eine Kraftübertragung bzw. Bewegungsübertragung von den Betätigungselementen 82, 84 hin zu den Abschnitten 34, 36 erfolgen.

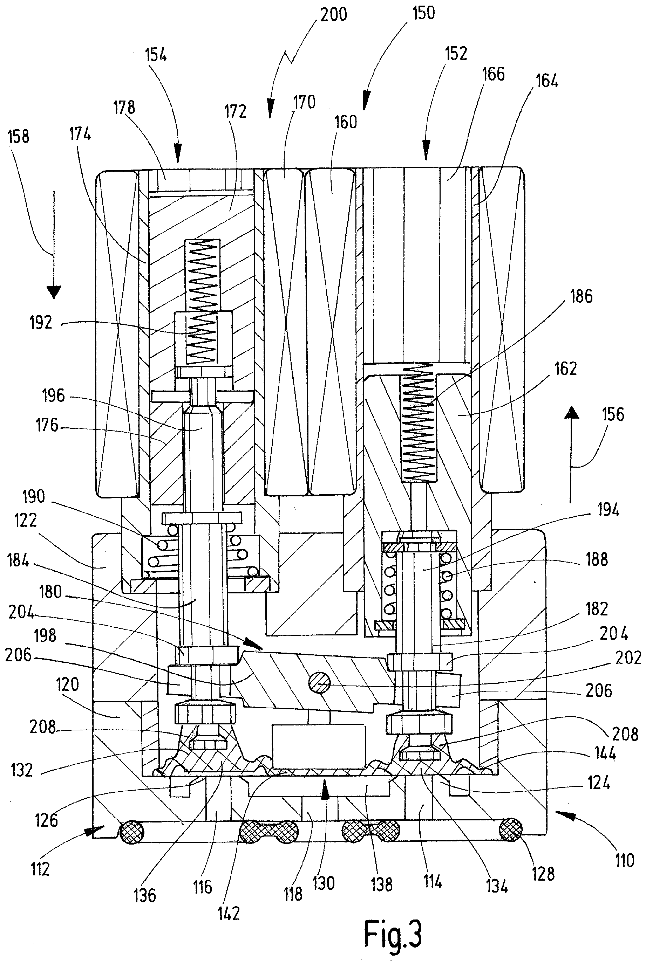

Mit Bezugnahme auf die Figuren 3 bis 6 werden weitere beispielhafte Ausgestaltungen von Ventilanordnungen veranschaulicht, die mit Vorrichtungen zur Durchflussregelung versehen sind, die eine Betätigungseinheit mit zwei Elektromagneten aufweisen. Es versteht sich, dass Einzelmerkmale und Einzelaspekte einer der hierin gezeigten beispielhaften Ausführungsformen auch auf andere Ausführungsformen übertragbar sind.

Fig. 3 veranschaulicht eine insgesamt mit 110 bezeichnete Ventilanordnung, die eine mit 200 bezeichnete Vorrichtung zur Durchflussregelung umfasst.

Die Ventilanordnung 110 weist ein Gehäuse 112 auf, das beispielhaft ein erstes Gehäuseteil 120 und ein zweites Gehäuseteil 122 umfasst. Ferner umfasst das Gehäuse 112 einen ersten Anschluss 114, einen zweiten Anschluss 116 und einem dritten Anschluss 118, die beispielhaft am Gehäuseteil 120 ausgebildet sind. Dem ersten Anschluss 114 ist ein erster Ventilsitz 124 zugeordnet. Dem zweiten Anschluss 116 ist ein zweiter Ventilsitz 126 zugeordnet. Am Gehäuse 112 ist ferner eine mit 128 bezeichnete Dichtung aufgenommen, die bedarfsweise die Anschlüsse 114, 116, 118 abdichtet.

Die Ventilanordnung 110 umfasst ferner ein Ventilglied 130, das einen Schließkörper 132 aufweist. Der Schließkörper 132 umfasst einen ersten Abschnitt (Dichtungsabschnitt) 134 und einen zweiten Abschnitt (Dichtungsabschnitt) 136. Der Abschnitt 134 ist dem Ventilsitz 124 zugeordnet. Der Abschnitt 136 ist dem Ventilsitz 126 zugeordnet. Das Ventilglied 130, insbesondere der Schließkörper 132, dichtet eine Ventilkammer 138 hermetisch ab.

Der Schließkörper 132 umfasst oder besteht im Wesentlichen aus einer Weichkomponente 142. Das Ventilglied 130 kann insgesamt als Ventilmembran bezeichnet werden. Am Ventilglied 130 ist ferner eine mit 144 bezeichnete Aufnahmedichtung vorgesehen, die etwa eine Dichtung zwischen dem ersten Gehäuseteile 120 und dem zweiten Gehäuseteil 122 bewerkstelligt. Zur Betätigung der Ventilanordnung 110 umfasst die Vorrichtung 200 eine Betätigungseinheit 150, die einen ersten Elektromagnet 152 und einen zweiten Elektromagnet 154 aufweist. Ähnlich wie bei der Ventilanordnung 10, die beispielhaft anhand der Figuren 1 und 2 veranschaulicht wurde, weisen die Elektromagneten 152, 154 entgegengerichtete Wirkrichtungen 156, 158 auf.

Der Elektromagnet 152 umfasst eine Spule 160 und einen Anker 162, der in einer Führungshülse 164 beweglich aufgenommen ist. Ferner ist ein mit 166 bezeichneter Stopfen vorgesehen, der auch als Magnetkern bezeichnet werden kann. Der Stopfen 166 ist fest mit der Führungshülse 164 verbunden.

Der Elektromagnet 154 umfasst eine Spule 170 und einen Anker 172, der beweglich in einer Führungshülse 174 aufgenommen ist. Ferner ist ein mit 176 bezeichneter Stopfen vorgesehen, der fest mit der Führungshülse 174 verbunden ist. Ferner umfasst der Elektromagnet 154 eine Abschlusskappe 178.

Der Anker 162 des Elektromagneten 152 ist zwischen dem Stopfen 166 und dem Ventilglied 130 angeordnet. Der Stopfen oder Kern 176 des Elektromagneten 154 ist zwischen dem Anker 172 und dem Ventilglied 130 angeordnet.

Analog zur Gestaltung der Ventilanordnung 10 gemäß den Figuren 1 und 2 sind auch die Elektromagneten 152, 154 der Ventilanordnung 110 gemäß Fig. 3 als Zugmagneten ausgestaltet und mit Zugankern 162, 172 versehen. Im bestromten Zustand des Magneten 152 wird der Anker 162 vom Ventilglied 130 bzw. vom Ventilsitz 124 wegbewegt (vergleiche den Pfeil 156). Wenn der Elektromagnet 154 bestromt wird, wird der Anker 172 in Richtung auf das Ventilglied 130 bzw. den Ventilsitz 126 bewegt, vergleiche den Pfeil 158.

Die Vorrichtung 200 umfasst ferner einen Koppelmechanismus 180, der die Betätigungseinheit 150 mit der Ventilanordnung 110, insbesondere mit dem Ventilglied 130 koppelt.

Der Koppelmechanismus 180 umfasst ein Betätigungselement 182, das dem Elektromagneten 152 zugeordnet ist. Ferner ist ein Betätigungselement 184 vorgesehen, das dem Elektromagneten 154 zugeordnet ist. Das Betätigungselement 182 ist insbesondere als Stößel 194 ausgebildet. Das Betätigungselement 184 ist insbesondere als Stößel 196 ausgebildet.

Dem ersten Elektromagneten 152 ist eine Schließfeder 186 zugeordnet, die auch als Rückstellelement bezeichnet werden kann. Dem zweiten Elektromagneten 154 ist eine Schließfeder 190 zugeordnet, die auch als Rückstellelement bezeichnet werden kann. Die durch die Feder 186 aufgebrachte Kraft muss beim Bewegen des Ankers 162 überwunden werden, wenn der Elektromagnet 152 bestromt wird. Die durch die Schließfeder 190 aufgebrachte Kraft muss beim Bewegen des Ankers 172 überwunden werden, wenn der Elektromagnet 154 bestromt wird.

Dem Elektromagneten 152 ist ferner eine Pufferfeder 188 zugeordnet. Dem Elektromagneten 154 ist ferner eine Pufferfeder 192 zugeordnet. Das als Stößel 194 ausgebildete Betätigungselement 182 ist mit dem Anker 162 gekoppelt, wobei die Pufferfeder 188 zwischengeschaltet ist. Das als Stößel 196 ausgebildete Betätigungselement 184 ist mit dem Anker 172 gekoppelt, wobei die Pufferfeder 192 zwischengeordnet ist.

Der Koppelmechanismus 180 umfasst ferner einen Schwenkhebel 198, der an einer Schwenkachse 202 aufgenommen ist. Der Schwenkhebel 198 ist mit den Betätigungselementen 182, 184 gekoppelt, die vorzugsweise jeweils einer Seite des Schwenkhebels 198 zugeordnet sind. Der Schwenkhebel 198 bewirkt eine Zwangskopplung der Bewegung der Elektromagneten 152, 154. Es besteht jedoch keine unendlich starre oder steife Kopplung, da den (beweglichen) Ankern 162, 172 und den diesen zugeordneten Betätigungselementen 182, 184 jeweils eine Pufferfeder 188, 192 zwischengeordnet ist. Dies hat den Vorteil, dass keine übermäßig hohen Toleranzanforderungen an die beteiligten Bauteile bestehen.

Beispielhaft umfasst der Schwenkhebel 198 an seinen Enden jeweils eine Mitnahmeausnehmung 206, die einem entsprechenden Mitnahmeabschnitt 204 der Stößel 194, 196 zugeordnet ist. Mit anderen Worten ist der Schwenkhebel 198 etwa wippenartig gestaltet. Der Schwenkhebel 198 bewirkt, dass die Bewegung eines der Betätigungselemente 182, 184 in Richtung auf das Ventilglied 130 in eine entgegengesetzte Bewegung des anderen Betätigungselements 182, 184 weg vom Ventilglied 130 umgesetzt wird. Dies entspricht auch den entgegengesetzten Wirkrichtungen 156, 158 der Elektromagnete 152, 154.

An ihrem dem Ventilglied 130 zugewandten Ende sind die Stößel 194, 196 beispielhaft zur formschlüssigen Verbindung mit dem Ventilglied 130 ausgebildet. Zu diesem Zweck ist am Ventilglied 130 jeweils ein Fügeabschnitt 208 ausgebildet, der beispielhaft ein Endstück der Stößel 194, 196 kappenartig oder tüllenartig umgibt. Der Fügeabschnitt 208 kann eine formschlüssige, kraftschlüssige und/oder stoffschlüssige Kopplung zwischen dem Ventilglied 130 und jeweiligen Betätigungselementen 182, 184 bewirken.

Anhand der Figuren 4, 5 und 6 wird eine weitere Ausgestaltung einer Ventilanordnung 210 veranschaulicht, die mit einer mit 300 bezeichneten Vorrichtung zur Durchflussregelung versehen ist. Ähnlich wie bei den Ausführungsformen, die anhand der Figuren 1, 2 und 3 beschrieben wurden, weist auch die Ventilanordnung 210 ein Gehäuse 212 auf, das mit Anschlüssen 214, 216, 218 versehen ist. Dem Anschluss 214 ist ein Ventilsitz 224 zugeordnet. Dem Anschluss 216 ist ein Ventilsitz 226 zugeordnet. Ferner weist das Gehäuse 212 anschlussseitig eine Dichtung 228 für die Anschlüsse 214, 216, 218 auf.

Die Ventilanordnung 210 umfasst ferner ein Ventilglied 230, das einen Schließkörper 232 umfasst, der einen ersten Abschnitt (Dichtungsabschnitt) 234 und einen zweiten Abschnitt 236 (Dichtungsabschnitt) aufweist. Der erste Abschnitt 234 ist dem Ventilsitz 224 zugeordnet. Der zweite Abschnitt 236 ist dem Ventilsitz 226 zugeordnet. Ferner umfasst das Ventilglied 230 einen mit 240 bezeichneten Träger, der etwa aus einem Metallwerkstoff gestaltet ist. Der Schließkörper 232 ist beispielhaft aus einem weichelastischen Material oder einem gummielastischen Material gefertigt. Das Ventilglied 230 umfasst ferner eine Aufnahmedichtung 244, die eine Ventilkammer 238 hermetisch gegenüber einer Betätigungseinheit 250 abdichtet.

Das Ventilglied 30, das anhand der Figuren 1 und 2 veranschaulicht wurde, ist etwa als Ventilklappe oder Trennhebel ausgestaltet, wobei teilweise weichelastische Abschnitte vorgesehen sind. Das Ventilglied 130, das anhand der Fig. 3 veranschaulicht wurde, ist etwa als Membran ausgestaltet. Das Ventilglied 230, das in Fig. 4 gezeigt ist, ist etwa als Schwenkelement oder Schließhebel gestaltet, der aufgrund der Elastizität des Trägers 240 und des Schließkörpers 232 auslenkbar ist, um wechselseitig entweder den Ventilsitz 224 oder den Ventilsitz 226 zu sperren oder freizugeben.

Zur Betätigung des Ventilglieds 230 umfasst die Vorrichtung 300 mit der Betätigungseinheit 250 eine Anordnung, die einen ersten Elektromagnet 252 (Fig. 4) sowie einen zweiten Elektromagnet 254 (Fig. 5) umfasst.

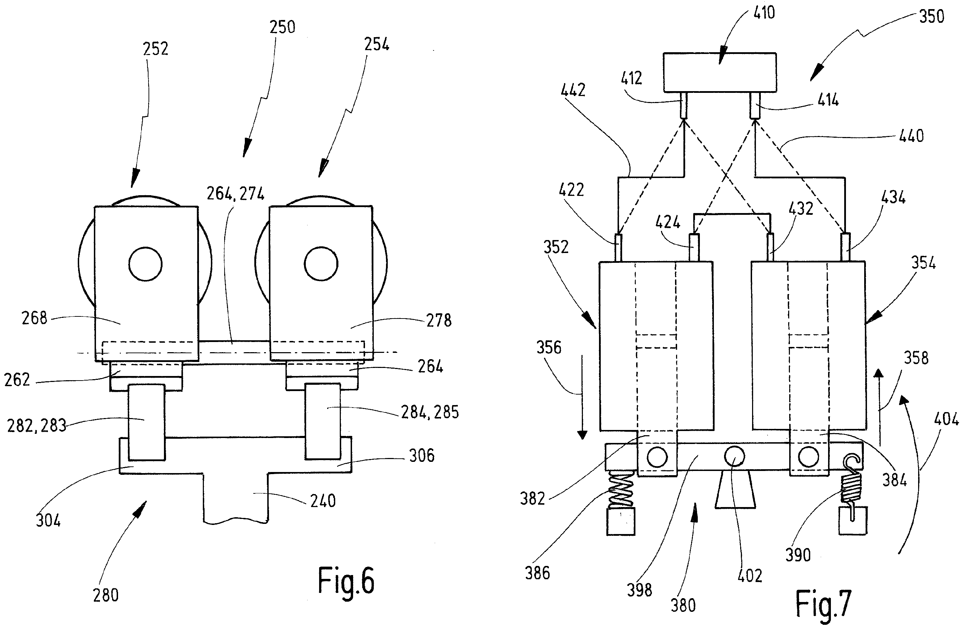

Die räumliche Anordnung der Elektromagneten 252, 254 wird anhand der Fig. 6 veranschaulicht, die in schematischer, stark vereinfachter Darstellung eine seitliche Teilansicht der Betätigungseinheit 250 gemäß den Figuren 4 und 5 zeigt.

Mit anderen Worten sind die Elektromagnete 252, 254 gemäß der Ansichtsorientierung, die in den Figuren 4 und 5 genutzt wird, hintereinander angeordnet.

Der erste Elektromagnet 252 umfasst eine Spule 260 sowie einen Anker 262, der als Schwenkanker gestaltet ist. Ferner ist ein mit 266 bezeichneter Kern vorgesehen. Beidseitig der Spule 260 erstreckt sich ein Joch 268 zwischen dem Kern 266 und dem Anker 262.

Der zweite Elektromagnet 254 umfasst eine Spule 270 sowie einen Anker 272, der als Schwenkanker gestaltet ist. Ferner umfasst der Elektromagnet 254 einen Kern 276. Beidseitig der Spule 270 erstreckt sich zwischen dem Kern 276 und dem Anker 272 ein Joch 278.

Die Anker 262, 272 sind als Schwenkanker ausgeführt und um eine jeweilige Schwenkachse 264, 274 verschwenkbar. Fig. 6 zeigt, dass die Schwenkachsen 264, 274 durch ein gemeinsames Teil gebildet sein können.

Die Betätigungseinheit 250 ist über einen Koppelmechanismus 280 mit dem Ventilglied 230 verbunden. Dem Koppelmechanismus sind Betätigungselemente zugeordnet, die beispielhaft als Blattfedern ausgestaltet sind und eine Schwenkmitnahme des Ventilglieds 230 bewirken, wenn die Anker 262, 272 verschwenkt werden.

Der Schwenkanker 262 ist mit Betätigungselementen 282, 283 versehen, die etwa als Betätigungsfedern in Form von Blattfedern ausgestaltet sind. Der Schwenkanker 272 ist mit Betätigungselementen 284, 285 versehen, die als Betätigungsfedern in Form von Blattfedern ausgestaltet sind. Die Betätigungselemente 282, 283 sind einander gegenüberliegenden Seiten eines Mitnahmeabschnitts 304 des Trägers 240 zugeordnet. Die Betätigungselemente 284, 285 sind gegenüberliegenden Seiten eines Mitnahmeabschnitts 306 des Trägers 240 zugeordnet. Je nach aktueller Schwenkposition des Ankers 262, 272 drängen die Betätigungselemente 282, 283 bzw. 284, 285 den Träger 240 in eine von zwei Richtungen, denen eine entsprechend Schaltstellung des Schließkörpers 232 zugeordnet ist.

Die Betätigungseinheit 250 umfasst ferner eine Rückstelleinheit, die als permanentmagnetische Rückstelleinheit gestaltet ist. Die Rückstelleinheit umfasst zumindest einen Permanentmagneten 286, 288, der dem Schwenkanker 262 zugeordnet ist. Vorzugsweise sind zwei Permanentmagneten 286, 288 vorgesehen. Ferner umfasst die Rückstelleinheit auf Seiten des Elektromagneten 254 beispielhaft zumindest einen Elektromagneten 290, 292, der dem Schwenkanker 272 zugeordnet ist. Vorzugsweise sind zwei Permanentmagneten 290, 292 vorgesehen.

Ähnlich wie die zuvor beschriebenen Schließfedern 86, 90 wirken auch die Permanentmagneten 286, 288, 290, 292 jeweils einer Kraft (hier: Magnetkraft) entgegen, die im bestromten Zustand der Elektromagneten 252, 254 erzeugt wird.

In den Figuren 4 und 5 ist mit den Buchstaben N (Nordpol) und S (Nordpol) jeweils eine Polung der Permanentmagneten 286, 288, 290, 292 angedeutet. Die Polung der Permanentmagneten 286, 288 ist entgegengesetzt zur Polung der Permanentmagneten 290, 292. Dies bedeutet, dass die Elektromagneten 252, 254 gegensinnige Wirkrichtungen (im Sinne der Lenzschen Regel) aufweisen, um schlussendlich additiv auf das Ventilglied 230 einwirken zu können.

Aus Fig. 6 wird ferner ersichtlich, dass der mit den Mitnahmeabschnitten 304, 306 versehene Träger 240 beispielhaft etwa T-förmig gestaltet sein kann, um den Elektromagneten 252, 254 einen additiven Kraftangriff an den Mitnahmeabschnitten 304, 306 zur Betätigung der Ventilanordnung 210 zu ermöglichen.

Zur näheren Beschreibung der Funktion den Ventilanordnung 210, insbesondere des Ventilglieds 230, wird ergänzend auf die EP 2 365 239 A1 verwiesen.

Fig. 7 veranschaulicht anhand einer schematisch stark vereinfachten Darstellung eine weitere Ausführungsform einer Betätigungseinheit 350 für eine Ventilanordnung. Die Betätigungseinheit 350 kann mit den vorstehend beschriebenen Ventilgestaltungen kombiniert werden.

Die Betätigungseinheit 350 umfasst einen ersten Elektromagnet 352 und einen zweiten Elektromagnet 354, die gegensinnige Wirkrichtungen 356, 358 aufweisen. Der Betätigungseinheit 350 ist ein Koppelmechanismus 380 zugeordnet, der Betätigungselemente 382, 384 umfasst. Das Betätigungselement 382 ist beispielhaft mit einem Anker des ersten Elektromagneten 352 gekoppelt. Das Betätigungselement 384 ist beispielhaft mit einem Anker des zweiten Elektromagneten 354 gekoppelt. Der Koppelmechanismus 380 umfasst ferner einen Schwenkhebel 398, der um eine Achse 402 verschwenkbar ist. Ein in Fig. 7 mit 404 bezeichneter Pfeil beschreibt eine Schwenkrichtung des Schwenkhebels 398, wenn die Elektromagneten 352, 354 bestromt werden. Durch die Bewegung des Schwenkhebels 398 erfolgt eine Synchronisierung bzw. Zwangskopplung der Elektromagneten 352, 354.

Wie vorstehend bereits beschrieben, ist dem ersten Elektromagneten 352 beispielhaft eine Schließfeder (Druckfeder) 386 zugeordnet. Ferner ist dem zweiten Elektromagneten 354 beispielhaft eine Schließfeder (Zugfeder) 390 zugeordnet.

In Fig. 7 ist ferner durch einen mit 410 bezeichneten Block eine Steuereinrichtung schematisch angedeutet, die beispielhaft eine Spannungsquelle umfasst oder mit einer Spannungsquelle gekoppelt ist. Die Steuereinrichtung 410 umfasst Kontakte 412, 414, wobei der Kontakt 412 einem ersten Kontakttyp und der Kontakt 414 einem zweiten Kontakttyp entspricht. Der jeweilige Kontakttyp kann beispielhaft einer entsprechenden Polung zugeordnet sein.

Auch die Elektromagneten 352, 354, insbesondere deren Spulenwicklungen, sind mit Kontakten 422, 424, 432, 434 versehen. Die Kontakte 422, 424 sind dem ersten Elektromagneten 352 zugeordnet. Die Kontakte 432, 434 sind dem zweiten Elektromagneten 354 zugeordnet. Die Kontakte 422, 432 entsprechen ihrem Typ nach dem Kontakt 412. Die Kontakte 424, 434 entsprechen ihrem Typ nach dem Kontakt 414.

Fig. 7 veranschaulicht verschiedene Ansteuerungsmodi für die Elektromagneten 352, 354, die grundsätzlich in jeder der anhand der Figuren 1 bis 6 veranschaulichten Ausgestaltungen nutzbar sind.

Mit 440 bezeichnete gestrichelte Linien zwischen den Kontakten 412, 414 und den Kontakten 422, 424, 432, 434 veranschaulichen eine parallele Ansteuerung der Elektromagneten 352, 354. Mit 442 bezeichnete durchgehende Linien zwischen den Kontakten 412, 414 und den Kontakten 422, 424, 432, 434 veranschaulichen eine serielle Verschaltung der Elektromagneten 352, 354.

Bei der parallelen Verschaltung 440 wird eine hohe Magnetkraft erzeugt, die mit einem hohen Leistungsbedarf einhergeht. Bei der seriellen Ansteuerung 442 wird eine niedrigere Magnetkraft bewirkt, die mit einem geringeren Leistungsbedarf einhergeht.

Es versteht sich, dass zwischen den Ansteuerungsmodi gewechselt werden kann. Dies kann beispielhaft eine parallele Ansteuerung für einen Anzugzeitraum sowie ein anschließendes Umschalten auf eine serielle Ansteuerung für eine reduzierte Haltekraft umfassen. Auf diese Weise kann einerseits zunächst eine hohe Magnetkraft bereitgestellt werden. Zum Halten der Last wird häufig jedoch nur eine geringere Kraft benötigt, die mit einem geringeren Energieaufwand bereitgestellt werden kann.

## Patentansprüche

1. Vorrichtung zur Durchflussregelung eines Fluids, mit einem Ventilgehäuse (12; 112; 212) mit zumindest zwei Ventilanschlüssen (14, 16, 18; 114, 116, 118; 214, 216, 218), wobei im Ventilgehäuse (12; 112; 212) zumindest ein Fluidpfad ausgebildet ist, der sich zwischen den zumindest zwei Ventilanschlüssen (14, 16, 18; 114, 116, 118; 214, 216, 218) erstreckt, zumindest einem Ventilsitz (24, 26; 124, 126; 224, 226), der dem zumindest einen Fluidpfad zugeordnet ist, zumindest einem Schließkörper (32; 132; 232), der mit dem zumindest einen Ventilsitz (24, 26; 124, 126; 224, 226) koppelbar ist, um den zumindest einen Fluidpfad zu sperren oder freizugeben, und einer elektromagnetischen Betätigungseinheit (50; 150; 250; 350) zur Betätigung des Schließkörpers (32; 132; 232), wobei die Betätigungseinheit (50; 150; 250; 350) einen ersten Elektromagnet (52; 152; 252; 352) und einen zweiten Elektromagnet (54; 154; 254; 354) aufweist, wobei der erste Elektromagnet (52; 152; 252; 352) und der zweite Elektromagnet (54; 154; 254; 354) über einen Koppelmechanismus (80; 180; 280; 380) mit dem Schließkörper (32; 132; 232) gekoppelt sind, wobei der erste Elektromagnet (52; 152; 252; 352) und der zweite Elektromagnet (54; 154; 254; 354) additiv auf den Schließkörper (32; 132; 232) einwirken, um den Schließkörper (32; 132; 232) zwischen zumindest zwei Stellungen zu verlagern, **dadurch gekennzeichnet, dass** der Koppelmechanismus (80; 180; 280; 380) eine Zwangskopplung zwischen dem ersten Elektromagneten (52; 152; 252; 352) und dem zweiten Elektromagneten (54; 154; 254; 354) bewirkt.

2. Vorrichtung nach Anspruch 1, **dadurch gekennzeichnet, dass** der erste Elektromagnet (52; 152; 252; 352) und der zweite Elektromagnet (54; 154; 254; 354) gegensinnige Wirkrichtungen aufweisen.

3. Vorrichtung nach Anspruch 1 oder 2, **dadurch gekennzeichnet, dass** der erste Elektromagnet (52; 152; 252; 352) einen ersten Anker (62; 162; 262) und der zweite Elektromagnet (54; 154; 254; 354) einen zweiten Anker (72; 172; 272) aufweist, die dem Koppelmechanismus (80; 180; 280; 380) zugeordnet sind.

4. Vorrichtung nach Anspruch 3, **dadurch gekennzeichnet, dass** zumindest der erste Anker (62; 162; 262) oder der zweite Anker (72; 172; 272) als Zuganker gestaltet ist, oder dass zumindest der erste Anker (62; 162; 262) oder der zweite Anker (72; 172; 272) als Schwenkanker oder Klappanker gestaltet ist.

5. Vorrichtung nach einem der Ansprüche 1 bis 4, **dadurch gekennzeichnet, dass** zumindest der erste Elektromagnet (52; 152; 252; 352) oder der zweite Elektromagnet (54; 154; 254; 354) mit einer Rückstelleinheit gekoppelt ist, die magnetische Rückstellelemente (286, 288, 290, 292) oder mechanische Rückstellelemente (86, 90; 186, 190; 386, 390) umfasst.

6. Vorrichtung nach einem der Ansprüche 1 bis 4, **dadurch gekennzeichnet, dass** zumindest der erste Anker (62; 162; 262) oder der zweite Anker (72; 172; 272) über ein Ausgleichselement, insbesondere eine Pufferfeder (88, 92; 188, 192), mit dem Koppelmechanismus (80; 180; 280; 380) gekoppelt sind.

7. Vorrichtung nach einem der Ansprüche 1 bis 6, **dadurch gekennzeichnet, dass** das Ventilgehäuse (12; 112; 212) drei Ventilanschlüsse (14, 16, 18; 114, 116, 118; 214, 216, 218) aufweist, die zwei Fluidpfade definieren.

8. Vorrichtung nach einem der Ansprüche 1 bis 7, **dadurch gekennzeichnet, dass** der Koppelmechanismus (80; 180; 280; 380) einen Schwenkhebel (192; 398) umfasst, auf den der erste Elektromagnet (52; 152; 252; 352) und der zweite Elektromagnet (54; 154; 254; 354) einwirken.

9. Vorrichtung nach einem der Ansprüche 1 bis 8, **dadurch gekennzeichnet, dass** die Betätigungseinheit (50; 150; 250; 350) vom zumindest einen Fluidpfad hermetisch getrennt ist.

10. Vorrichtung nach einem der Ansprüche 1 bis 9, **dadurch gekennzeichnet, dass** der Schließkörper (32; 132; 232) eine Abdichtung zwischen dem zumindest einen Fluidpfad und der Betätigungseinheit (50; 150; 250; 350) bewirkt, wobei der Schließkörper (32; 132; 232) zumindest abschnittsweise auslenkbar ist, um den zumindest einen Ventilsitz (24, 26; 124, 126; 224, 226) zu verschließen oder zu öffnen.

11. Vorrichtung nach einem der Ansprüche 1 bis 10, **dadurch gekennzeichnet, dass** der Schließkörper (32; 132; 232) eine Membran umfasst.

12. Vorrichtung nach einem der Ansprüche 1 bis 10, **dadurch gekennzeichnet, dass** der Schließkörper (32; 132; 232) einem Ventilglied (30; 130; 230) zugeordnet ist, das ein Trägerteil (40; 240) umfasst, insbesondere ein auslenkbares Trägerteil.

13. Vorrichtung nach einem der Ansprüche 1 bis 12, **dadurch gekennzeichnet, dass** der erste Elektromagnet (52; 152; 252; 352) und der zweite Elektromagnet (54; 154; 254; 354) gemeinsam in einem bestromten Zustand und einem nicht bestromten Zustand betreibbar sind, um den Schließkörper (32; 132; 232) in eine erste Schließstellung und eine zweite Schließstellung zu verlagern, wobei die erste Schließstellung dem bestromten Zustand und die zweite Schließstellung dem nicht bestromten Zustand zugeordnet ist.

14. Vorrichtung nach einem der Ansprüche 1 bis 13, **dadurch gekennzeichnet, dass** der erste Elektromagnet (52; 152; 252; 352) und der zweite Elektromagnet (54; 154; 254; 354) gemeinsam parallel sowie seriell bestrombar sind, um zumindest eine erste Betriebsart und eine zweite Betriebsart bereitzustellen.

15. Ventilanordnung (10; 110; 210) mit einer Vorrichtung nach einem der vorhergehenden Ansprüche.

## Claims

1. A device for regulating the flow of a fluid, comprising a valve housing (12; 112; 212) having at least two valve connections (14, 16, 18; 114, 116, 118; 214, 216, 218), wherein at least one fluid path which extends between the at least two valve connections (14, 16, 18; 114, 116, 118; 214, 216, 218) is formed in the valve housing (12; 112; 212), at least one valve seat (24, 26; 124, 126; 224, 226) which is assigned to the at least one fluid path, at least one closing element (32; 132; 232) which can be coupled to the at least one valve seat (24, 26; 124, 126; 224, 226) in order to block or release the at least one fluid path, and an electromagnetic actuating unit (50; 150; 250; 350) for actuating the closing element (32; 132; 232), wherein the actuating unit (50; 150; 250; 350) comprises a first electromagnet (52; 152; 252; 352) and a second electromagnet (54; 154; 254; 354),
wherein the first electromagnet (52; 152; 252; 352) and the second electromagnet (54; 154; 254; 354) are coupled to the closing element (32; 132; 232) via a coupling mechanism (80; 180; 280; 380),
wherein the first electromagnet (52; 152; 252; 352) and the second electromagnet (54; 154; 254; 354) additively act on the closing element (32; 132; 232) in order to displace the closing element (32; 132; 232) between at least two positions, **characterized in that** the coupling mechanism (80; 180; 280; 380) effectuates a forced coupling between the first electromagnet (52; 152; 252; 352) and the second electromagnet (54; 154; 254; 354).

2. The device according to claim 1, **characterized in that** the first electromagnet (52; 152; 252; 352) and the second electromagnet (54; 154; 254; 354) have opposing effective directions.

3. The device according to claim 1 or 2, **characterized in that** the first electromagnet (52; 152; 252; 352) comprises a first armature (62; 162; 262) and the second electromagnet (54; 154; 254; 354) comprises a second armature (72; 172; 272), which armatures are assigned to the coupling mechanism (80; 180; 280; 380).

4. The device according to claim 3, **characterized in that** at least the first armature (62; 162; 262) or the second armature (72; 172; 272) is designed as a pull-in armature, or at least the first armature (62; 162; 262) or the second armature (72; 172; 272) is designed as a pivoted armature.

5. The device according to one of the claims 1 to 4, **characterized in that** at least the first electromagnet (52; 152; 252; 352) or the second electromagnet (54; 154; 254; 354) is coupled to a return unit which comprises magnetic return elements (286, 288, 290, 292) or mechanical return elements (86, 90; 186, 190; 386, 390).

6. The device according to one of claims 1 to 4, **characterized in that** at least the first armature (62; 162; 262) or the second armature (72; 172; 272) is coupled to the coupling mechanism (80; 180; 280; 380) via a compensating element, in particular a buffer spring (88, 92; 188, 192).

7. The device according to one of the claims 1 to 6, **characterized in that** the valve housing (12; 112; 212) comprises three valve connections (14, 16, 18; 114, 116, 118; 214, 216, 218), which define two fluid paths.

8. The device according to one of the claims 1 to 7, **characterized in that** the coupling mechanism (80; 180; 280; 380) comprises a pivoting lever (192; 398), on which the first electromagnet (52; 152; 252; 352) and the second electromagnet (54; 154; 254; 354) act.

9. The device according to one of the claims 1 to 8, **characterized in that** the actuating unit (50; 150; 250; 350) is hermetically separated from the at least one fluid path.

10. The device according to one of the claims 1 to 9, **characterized in that** the closing element (32; 132; 232) effectuates a seal between the at least one fluid path and the actuating unit (50; 150; 250; 350), wherein at least sections of the closing element (32; 132; 232) are deflectable in order to close or open the at least one valve seat (24, 26; 124, 126; 224, 226).

11. The device according to one of the claims 1 to 10, **characterized in that** the closing element (32; 132; 232) comprises a diaphragm.

12. The device according to one of the claims 1 to 10, **characterized in that** the closing element (32; 132; 232) is assigned to a valve element (30; 130; 230) which comprises a support part (40; 240), in particular a deflectable support part.

13. The device according to one of the claims 1 to 12, **characterized in that** the first electromagnet (52; 152; 252; 352) and the second electromagnet (54; 154; 254; 354) can be jointly operated in an energized state and in a non-energized state in order to displace the closing element (32; 132; 232) into a first closed position and a second closed position, wherein the first closed position is assigned to the energized state and the second closed position is assigned to the non-energized state.

14. The device according to one of the claims 1 to 13, **characterized in that** the first electromagnet (52; 152; 252; 352) and the second electromagnet (54; 154; 254; 354) can be jointly energized in parallel and in series in order to provide at least a first operating mode and a second operating mode.

15. A valve arrangement (10; 110; 210) comprising a device according to any one of the preceding claims.

## Revendications

1. Dispositif de régulation du débit d'un fluide, comprenant un boîtier de soupape (12 ; 112 ; 212) comprenant au moins deux raccords de soupape (14, 16, 18 ; 114, 116, 118 ; 214, 216, 218), au moins un chemin de fluide étant réalisé dans le boîtier de soupape (12 ; 112 ; 212), lequel s'étend entre les au moins deux raccords de soupape (14, 16, 18 ; 114, 116, 118 ; 214, 216, 218), au moins un siège de soupape (24, 26 ; 124, 126 ; 224, 226), qui est acheminé à l'au moins un chemin de fluide, au moins un corps de fermeture (32 ; 132 ; 232), qui peut être accouplé à l'au moins un siège de soupape (24, 26 ; 124, 126 ; 224, 226), afin de bloquer ou de libérer l'au moins un chemin de fluide, et une unité d'activation électromagnétique (50 ; 150 ; 250 ; 350) pour l'actionnement du corps de fermeture (32 ; 132 ; 232), l'unité d'activation (50 ; 150 ; 250 ; 350) présentant un premier électroaimant (52 ; 152 ; 252 ; 352) et un deuxième électroaimant (54 ; 154 ; 254 ; 354), le premier électroaimant (52 ; 152 ; 252 ; 352) et le deuxième électroaimant (54 ; 154 ; 254 ; 354) étant accouplés par le biais d'un mécanisme d'accouplement (80 ; 180 ; 280 ; 380) au corps de fermeture (32 ; 132 ; 232), le premier électroaimant (52 ; 152 ; 252 ; 352) et le deuxième électroaimant (54 ; 154 ; 254 ; 354) agissant de manière additive sur le corps de fermeture (32 ; 132 ; 232), afin de déplacer le corps de fermeture (32 ; 132 ; 232) entre au moins deux positions, **caractérisé en ce que** le mécanisme d'accouplement (80 ; 180 ; 280 ; 380) provoque un accouplement forcé entre le premier électroaimant (52 ; 152 ; 252 ; 352) et le deuxième électroaimant (54 ; 154 ; 254 ; 354).

2. Dispositif selon la revendication 1, **caractérisé en ce que** le premier électroaimant (52 ; 152 ; 252 ; 352) et le deuxième électroaimant (54 ; 154 ; 254 ; 354) présentent des directions d'action de sens opposés.

3. Dispositif selon la revendication 1 ou 2, **caractérisé en ce que** le premier électroaimant (52 ; 152 ; 252 ; 352) présente une première armature (62 ; 162 ; 262) et le deuxième électroaimant (54 ; 154 ; 254 ; 354) présente une deuxième armature (72 ; 172 ; 272), qui sont associées au mécanisme d'accouplement (80 ; 180 ; 280 ; 380).

4. Dispositif selon la revendication 3, **caractérisé en ce qu'**au moins la première armature (62 ; 162 ; 262) ou la deuxième armature (72 ; 172 ; 272) est configurée sous forme de tirant d'ancrage ou **en ce qu'**au moins la première armature (62 ; 162 ; 262) ou la deuxième armature (72 ; 172 ; 272) est configurée sous forme d'armature pivotante ou d'armature basculante.

5. Dispositif selon l'une quelconque des revendications 1 à 4, **caractérisé en ce qu'**au moins le premier électroaimant (52 ; 152 ; 252 ; 352) ou le deuxième électroaimant (54 ; 154 ; 254 ; 354) est accouplé à une unité de rappel, qui comprend des éléments de rappel magnétiques (286, 288, 290, 292) ou des éléments de rappel mécaniques (86, 90 ; 186, 190 ; 386, 390).

6. Dispositif selon l'une quelconque des revendications 1 à 4, **caractérisé en ce qu'**au moins la première armature (62 ; 162 ; 262) ou la deuxième armature (72 ; 172 ; 272) sont accouplées par le biais d'un élément de compensation, notamment un ressort tampon (88, 92 ; 188, 192), au mécanisme d'accouplement (80 ; 180 ; 280 ; 380).

7. Dispositif selon l'une quelconque des revendications 1 à 6, **caractérisé en ce que** le boîtier de soupape (12 ; 112 ; 212) présente trois raccords de soupape (14, 16, 18 ; 114, 116, 118 ; 214, 216, 218), qui définissent deux chemins de fluide.

8. Dispositif selon l'une quelconque des revendications 1 à 7, **caractérisé en ce que** le mécanisme d'accouplement (80 ; 180 ; 280 ; 380) comprend un levier pivotant (192 ; 398) sur lequel agissent le premier électroaimant (52 ; 152 ; 252 ; 352) et le deuxième électroaimant (54 ; 154 ; 254 ; 354).

9. Dispositif selon l'une quelconque des revendications 1 à 8, **caractérisé en ce que** l'unité d'actionnement (50 ; 150 ; 250 ; 350) est séparée hermétiquement d'au moins un chemin fluidique.

10. Dispositif selon l'une quelconque des revendications 1 à 9, **caractérisé en ce que** le corps de fermeture (32 ; 132 ; 232) réalise une étanchéité entre l'au moins un chemin fluidique et l'unité d'actionnement (50 ; 150 ; 250 ; 350), le corps de fermeture (32 ; 132 ; 232) pouvant être dévié au moins en partie afin de fermer ou d'ouvrir l'au moins un siège de soupape (24, 26 ; 124, 126 ; 224, 226).

11. Dispositif selon l'une quelconque des revendications 1 à 10, **caractérisé en ce que** le corps de fermeture (32 ; 132 ; 232) comprend une membrane.

12. Dispositif selon l'une quelconque des revendications 1 à 10, **caractérisé en ce que** le corps de fermeture (32 ; 132 ; 232) est associé à un organe de soupape (30 ; 130 ; 230) qui comprend une partie de support (40 ; 240), en particulier une partie de support pouvant être déviée.

13. Dispositif selon l'une quelconque des revendications 1 à 12, **caractérisé en ce que** le premier électroaimant (52 ; 152 ; 252 ; 352) et le deuxième électroaimant (54 ; 154 ; 254 ; 354) peuvent fonctionner en commun dans un état alimenté en courant et un état non alimenté en courant afin de déplacer le corps de fermeture (32 ; 132 ; 232) dans une première position de fermeture et une deuxième position de fermeture, la première position de fermeture étant associée à l'état alimenté en courant et la deuxième position de fermeture étant associée à l'état non alimenté en courant.

14. Dispositif selon l'une quelconque des revendications 1 à 13, **caractérisé en ce que** le premier électroaimant (52 ; 152 ; 252 ; 352) et le deuxième électroaimant (54 ; 154 ; 254 ; 354) peuvent être alimentés en courant en commun parallèlement et en série afin de fournir au moins un premier type de fonctionnement et un deuxième type de fonctionnement.

15. Agencement de soupape (10 ; 110 ; 210) comprenant un dispositif selon l'une quelconque des revendications précédentes.
